# EUROPÄISCHE PATENTSCHRIFT

(11) **EP 1 107 938 B1**
(45) Veröffentlichungstag und Bekanntmachung des Hinweises auf die Patenterteilung: **22.01.2003**
(21) Anmeldenummer: 99952412.7
(22) Anmeldetag: 16.08.1999
(51) Int. Cl.: C07C 37/52, C07C 51/00, C07C 209/50, C08J 11/20

(54) **ZERSETZUNG VON DUROPLASTWERKSTOFFEN**
RECYCLING OF THERMOSETTING MATERIALS
RECYCLAGE DE MATERIAUX THERMODURCISSABLES

(30) Priorität: 27.08.1998 DE 19839083
(43) Veröffentlichungstag der Anmeldung: 20.06.2001
(73) Patentinhaber: SIEMENS AKTIENGESELLSCHAFT, 80333 München (DE)
(72) Erfinder: VON GENTZKOW, Wolfgang, D-91077 Kleinsendelbach (DE); BRAUN, Dietrich, D-64291 Darmstadt (DE); RUDOLF, Arnd-Peter, D-36381 Schlüchtern (DE)
(86) Internationale Anmeldenummer: DE9902560
(87) Internationale Veröffentlichungsnummer: WO00012598

(56) Entgegenhaltungen:
- EP-A- 0 953 418
- WO-A-96/16112
- D. BRAUN UND R. STEFFAN: "Chemische Untersuchungen zum Abbau vernetzter Phenol-Formaldehyd-Harze" DIE ANGEWANDTE MAKORMOLEKULARE CHEMIE, Bd. 92, Nr. 1523, - 1980 Seiten 169-189, XP002130515 WEINHEIM in der Anmeldung erwähnt

## Beschreibung

Die Erfindung betrifft ein rohstoffliches Recyclingverfahren für Duroplastwerkstoffe.

Beim technischen Einsatz von Kunststoffen wird neben kostengünstiger Zugänglichkeit, gutem Verarbeitungsverhalten und vorteilhaften Materialeigenschaften zunehmend die Frage nach dem Verbleib der Kunststoffe nach Gebrauch gestellt. Hinsichtlich angestrebter Materialkreisläufe gilt dabei der Grundsatz: Wiederverwenden vor Verwerten vor Entsorgen.

Da der Wiederverwendung von Kunststoffen in vielen Bereichen der Technik enge Grenzen gesetzt sind, tritt die Forderung nach Verwertung in den Vordergrund. Dabei sind die durch Wärmezufuhr schmelzbaren Thermoplaste grundsätzlich für die stoffliche Verwertung geeignet; Probleme bereiten allerdings gefüllte oder beispielsweise mit Glasfasern verstärkte Werkstoffe. Für duroplastische, d.h. gehärtete unschmelzbare Kunststoffe ist diese Vorgehensweise dagegen nicht möglich. Aber gerade Duroplastwerkstoffe stellen wegen ihrer hervorragenden mechanischen und thermischen Eigenschaften für viele Produkte in der Elektrotechnik und Elektronik die ideale Werkstoffauswahl dar. Dies gilt insbesondere für faserverstärkte Werkstoffe und Kunststoffverbunde.

In Deutschland werden jährlich einige 100000 t glasfaserverstärkte Kunststoffe (GFK) verarbeitet. Über 50 % dieser GFK-Werkstoffe sind Duroplastwerkstoffe. Als Harzsysteme werden Amino-, Epoxid-, Phenol- und ungesättigte Polyesterharze verwendet. Für Hochleistungsverbundwerkstoffe haben sich insbesondere Epoxidharze bewährt. Dabei kommen neben glasfaserverstärkten Epoxidharzwerkstoffen auch kohlefaserund mit Aramidfasern verstärkte Werkstoffe zum Einsatz.

Da wegen des gestiegenen Umweltbewußtseins zukünftige Verordnungen fast ausnahmslos die Rücknahme gebrauchter Güter durch den Hersteller vorsehen werden, müssen die Produzenten faserverstärkter Duroplastwerkstoffe zunehmend auch Recyclingmöglichkeiten für diese Werkstoffe anbieten.

Die energetische Verwertung (Verbrennung unter Energierückgewinnung) bringt für faserverstärkte oder hochgefüllte Kunststoffe nur beschränkte Vorteile, da der inerte Füllstoff- und Fasergehalt bis zu 70 % beträgt und als Abfall, meist als Sondermüll, entsorgt werden muß. Bei der Verbrennung halogenhaltiger Kunststoffe entstehen außerdem Halogenwasserstoffe, die aufwendig ausgewaschen und neutralisiert werden müssen.

Duroplastwerkstoffe können derzeit stofflich nur in Form von Partikelrecycling verwertet werden. Dazu müssen die Werkstoffe zerkleinert, gemahlen, aufbereitet und fraktioniert sowie gegebenenfalls gereinigt werden. Bei Leiterplatten müssen die metallischen Partikel vom Faser-/Kunststoffanteil abgetrennt werden. Das Kunststoffrecyclat kann dann als Füllstoff bis zu Anteilen von 15 % thermoplastischen oder duroplastischen Kunststoffen zugemischt werden. Durch die Mengenlimitierung auf 15 % gibt es aber kaum Möglichkeiten, Rücklaufteile zu recyceln. In den meisten Fällen beschränkt man sich deshalb auf die Wiedereinarbeitung der vor Ort bei der Verarbeitung anfallenden Abfallmengen. Diese Unzulänglichkeiten des werkstofflichen Recyclings zeigen die Notwendigkeit auf, über die bisherigen Ansätze hinaus das rohstoffliche Recycling voranzutreiben.

Über einen Abbau von Polymerstrukturen ist es möglich, petrochemische Basischemikalien herzustellen und dadurch Ressourcen zu schonen. Die erhaltenen Produkte können dann - direkt oder nach einer Aufbereitung - als Rohstoffe zur Kunststoffherstellung genutzt werden. Beim rohstofflichen Recycling gibt es folgende Möglichkeiten:
- Pyrolyse
- Vergasung
- Hydrolyse und Oxidation mit unter- oder überkritischem Wasser
- Hydrierung

Die Pyrolyse ist eine thermische Zersetzung organischer Verbindungen ohne Zufuhr von Sauerstoff unter Bildung von Gasen, kondensierbaren Produkten und festen, kohlenstoffhaltigen Rückständen; sie wird bei Temperaturen zwischen 550 und 1100°C durchgeführt. Die erhaltenen Produkte sind Pyrolysegas, -öl und -koks, wobei die erzielbaren Produktspezifikationen vom Temperaturbereich der Pyrolyse abhängen. Beim bislang lediglich kurzfristig durchgeführten Betrieb verschiedener Pyrolyseanlagen unter Einsatz von Kunststoffen hat sich gezeigt, daß die stofflich verwertbaren Pyrolyseöle sauerstoffreich und thermisch instabil sind, so daß die Aufarbeitung zu petrochemischen Grundstoffen relativ aufwendig ist. Die derzeitige Ausbeute an Pyrolyseprodukten, die unmittelbar wieder im Kunststoffherstellungsprozeß eingesetzt werden können, beträgt ca. 33 %.

Bei der Vergasung handelt es sich um eine partielle Oxidation. Dabei werden Kunststoffabfälle bei Temperaturen von ca. 1300 bis 1500°C mit Sauerstoff und gegebenenfalls Wasserdampf als Vergasungsmittel zu einem Gemisch aus Kohlenmonoxid und Wasserstoff (Synthesegas), Kohlendioxid sowie Methan, Ethylen und Acetylen umgesetzt; es verbleibt ein fester Rückstand von ca. 2 % Ruß mit Asche. Der Vergasungsprozeß kann aufgrund der freiwerdenden Reaktionswärme autotherm durchgeführt werden. Aus dem Synthesegas, das noch ca. 75 % des Energiegehaltes der Eingangsstoffe beinhaltet, lassen sich Methanol und dessen Folgeprodukte herstellen.

Die Hydrolyse und Oxidation von Kunststoffen mit unter- und überkritischem Wasser erfolgt in einem geschlossenen Behälter bei Temperaturen bis 500°C und Drücken bis 1000 bar. Der überkritische Punkt liegt bei 374°C; bei dieser Temperatur wird ein Druck von 221 bar erreicht. Ohne Oxidationsmittel erfolgt ausschließlich eine Hydrolyse. Durch den gezielten Angriff von Wassermolekülen an den Verknüpfungsstellen von Polykondensaten erfolgt deren Spaltung, womit die Rückgewinnung der Ausgangsmaterialien ermöglicht wird. Als Oxidationsmittel können Luft, Sauerstoff und Wasserstoffperoxid eingesetzt werden. Dabei wird das organische Gerüst des Kunststoffes zu Kohlendioxid und Wasser oxidiert. Der Stickstoffanteil in Stickstoffverbindungen wird in Ammoniak oder Stickstoff umgewandelt.

Bei der Hydrierung werden Kunststoffabfälle bei Temperaturen bis 480°C und Drücken bis 300 bar durch Anlagerung von Wasserstoff zu Kraftstoffen, Heizölen, Heizgasen oder Rohstoffen für die Petrochemie umgesetzt. Dabei wird eine Ausbeute an hydrierten Ölen, die in gängigen Raffinerien aufgearbeitet werden können, von ca. 80 % erzielt. Diese Ausbeute kann jedoch nur dann erreicht werden, wenn die Kunststoffe zusammen mit Rückstandsölen (Kunststoffanteil 8 bis 10 %) verarbeitet und sowohl im dechlorierten als auch im getrockneten Zustand eingesetzt werden.

Bei vernetzten, d.h. ausgehärteten Phenol-Formaldehyd-Harzen wurde zu deren Abbau - als Alternative zur Druckhydrierung mit Wasserstoff - der Einsatz von 1,2,3,4-Tetrahydronaphthalin (Tetralin) als Wasserstoffdonator vorgeschlagen (siehe: D. Braun, R. Steffan, Angew. Makromol. Chem. 92 (1980), Seiten 169 bis 189). Diese Vorgehensweise entspricht dem sogenannten Pott-Broche-Verfahren zur extraktiven Steinkohleverflüssigung (siehe: A. Pott, H. Broche, Fuel 13 (1934), Seiten 91 bis 95, 125 bis 128 und 154 bis 157). Hierbei kann Steinkohle mit Tetralin mit einem Umsatz von über 90 % verflüssigt werden.

Bei der hydrogenolytischen Spaltung der Phenol-Formaldehyd-Harze wurde gefunden, daß diese Harze - in Partikelform (Korngröße ≤ 2 mm) - mit Tetralin bei Temperaturen von 410°C innerhalb von 5 h überwiegend zu niedermolekularen, tetralinlöslichen phenolischen Spaltprodukten abgebaut werden; dabei werden Drücke bis zu 26 bar erreicht. Nach dem Abkühlen verbleibt nur ein geringer Überdruck durch geringe Anteile gasförmiger Spaltprodukte. Je nach Reaktionsdauer und -temperatur werden erhebliche Mengen an unlöslichen, verkohlten Abbauprodukten erhalten.

Aufgabe der Erfindung ist es, ein Verfahren bereitzustellen, das das rohstoffliche Recycling von Duroplastwerkstoffen, insbesondere von Epoxidharzwerkstoffen, unter möglichst milden Bedingungen mit geringem Energieaufwand und hoher Ausbeute an recyclierten Basischemikalien ermöglicht. Dabei soll vor allem eine Möglichkeit geschaffen werden, bei Duroplastverbundwerkstoffen auch die Verbundkomponenten in möglichst reiner Form zurückzugewinnen.

Dies wird erfindungsgemäß dadurch erreicht, daß ein Duroplastwerkstoff bei einer Temperatur von 200 bis 350°C - in Gegenwart eines Amins - mit einem partiell hydrierten aromatischen Kohlenwasserstoff behandelt wird.

Es wurde nämlich überraschenderweise gefunden, daß bei der hydrierenden, d.h. hydrogenolytischen Spaltung von Duroplastwerkstoffen, und insbesondere auch von Duroplastverbundwerkstoffen, mit einem partiell hydrierten aromatischen Kohlenwasserstoff - in Gegenwart einer Verbindung mit einem aminischen Strukturelement - eine quantitative Spaltung in niedermolekulare Verbindungen bereits bei Temperaturen ≥ 200°C sehr schonend durchgeführt werden kann. Hierdurch ergibt sich einerseits eine Energieersparnis (geringere Kosten), und andererseits werden aufgrund der milden Bedingungen bei der Hydrogenolyse keine teer- oder pechähnlichen Rückstände gebildet. Deshalb werden nicht nur die organischen Spaltprodukte in hohen Konzentrationen erhalten, sondern es können auch Einlagerungs- und Verbundkomponenten in reiner Form quantitativ zurückgewonnen werden.

Duroplaste sind aus härtbaren Harzen hergestellte vernetzte Kunststoffe. Die Erfindung findet insbesondere bei Duroplastwerkstoffen auf der Basis folgender technisch wichtiger Stoffgruppen Anwendung: Aminoharze, Epoxidharze, Phenolharze und ungesättigte Polyesterharze. Dem Recycling werden dabei besonders vorteilhaft Epoxidharzwerkstoffe unterworfen.

Als organische Spaltprodukte werden beim Recycling beispielsweise bei Phenolharzen Phenole und bei anhydridisch gehärteten Epoxidharzen Phthalsäuren nahezu quantitativ zurückgewonnen; bei aminisch gehärteten Epoxidharzen fallen Amine in hohen Konzentrationen an. Ansonsten werden Benzol, Phenol, Kresole und Isopropanol sowie andere Monomere erhalten.

Von Vorteil bei der Erfindung ist außerdem, daß die Werkstoffe nicht in Partikelform vorliegen müssen, d.h. vor der hydrierenden Spaltung nicht zerkleinert werden müssen, sondern als Bauteil insgesamt eingesetzt werden können. Dies ist insbesondere bei Bauteilen der Elektrotechnik und Elektronik von Bedeutung, die eine Vielzahl verschiedener Materialien in Kombination mit Duroplastformstoffen, insbesondere mit Epoxidharzformstoffen, enthalten. Auf diese Art können beispielsweise ganze Flachbaugruppen, Gehäuse oder Module größerer Bauteile ohne aufwendige Vorbehandlung in das Recycling eingebracht werden. Von sehr großer Bedeutung ist ferner, daß bei kohlefaserverstärkten Duroplastwerkstoffen die Kohlefasern in reiner Form zurückgewonnen werden. Dies ist sehr überraschend, da nach dem Pott-Broche-Verfahren auch Kohlenstoff hydriert wird.

Als partiell hydrierter aromatischer Kohlenwasserstoff , d.h. als Wasserstoffdonator, werden insbesondere 1,2,3,4-Tetrahydronaphthalin (Tetralin) und 9,10-Dihydroanthracen eingesetzt. Allgemein kommen bei der hydrierenden Spaltung als Wasserstoffdonatoren solche partiell hydrierten Aromaten in Betracht, welche eine hohe Rearomatisierungstendenz besitzen. Dies sind beispielsweise Verbindungen wie Fluoren, Phenalen, Xanthen, 7H-Benz[de]anthracen und Indolin (2,3-Dihydro-1H-indol). Vorteilhaft können auch Gemische von partiell hydrierten aromatischen Kohlenwasserstoffen verwendet werden. Ein derartiges Gemisch setzt sich beispielsweise aus Indolin und 1,2,3,4-Tetrahydronaphthalin zusammen.

Beim Verfahren nach der Erfindung erfolgt die hydrogenolytische Spaltung der Duroplastwerkstoffe in Gegenwart eines Amins bzw. einer Verbindung mit einem aminischen Strukturelement. Hierzu kann unmittelbar ein Amin eingesetzt werden. Enthält aber bereits der aromatische Kohlenwasserstoff ein entsprechendes Strukturelement, wie dies insbesondere bei Indolin der Fall ist, dann kann die Zugabe eines (zusätzlichen) Amins entfallen. Auch in den Fällen, in denen der Duroplastwerkstoff ein aminisches Strukturelement aufweist und damit bei der hydrierenden Spaltung ein Amin freigesetzt werden kann, wie dies insbesondere bei aminisch gehärteten Epoxidharzformstoffen der Fall ist, kann auf die gesonderte Zugabe eines Amins verzichtet werden.

Als Amine können aliphatische oder aromatische Mono-, Dioder Oligoamine dienen, und zwar in Form von primären oder sekundären Aminen. Bevorzugt eingesetzte Amine sind Ethanolamin und Octylamin. Ferner können auch folgende Verbindungen verwendet werden: Nonylamin, Decylamin, Undecylamin, Dodecylamin, Cyclohexylamin, Ethylendiamin, 1,3-Diamino-propan, 1,3-Diamino-2-propanol, 1,4-Diamino-butan, 1,5-Diamino-pentan, 1,6-Diamino-hexan, 1,7-Diamino-heptan, 1,8-Diamino-octan, 1,9-Diamino-nonan, 1,10-Diamino-decan, 1,12-Diamino-dodecan, 1,2-Diamino-cyclohexan, Diethylendiamin, Polyethylenimin, Tris-(2-aminoethyl)-amin, Bis- (3-aminopropyl)-amin, O,O'-Bis-(2-aminoethyl)-ethylenglykol, O,O'-Bis-(2-aminoethyl)-polyethylenglykol, Piperazin, Indolin, Piperidin, Benzylamin, Anilin, Diaminotoluol, Diaminopyridin, 4,4'-Diamino-dicyclohexylmethan und 4,4'-Diamino-diphenylether.

Überraschenderweise hat sich ferner gezeigt, daß Epoxidharzwerkstoffe selbst dann einer hydrogenolytischen Spaltung unterliegen, wenn kein Amin bzw. keine Verbindung mit einem aminischen Strukturelement vorhanden ist. Die Erfindung betrifft deshalb auch ein Verfahren zum rohstofflichen Recycling von Duroplastwerkstoffen auf Epoxidharzbasis, bei dem ein Epoxidharzwerkstoff bei einer Temperatur von 300 bis 350°C mit einem partiell hydrierten aromatischen Kohlenwasserstoff behandelt wird. Auf diese Weise können deshalb insbesondere anhydridisch gehärtete Epoxidharzformstoffe bzw. -werkstoffe und -verbundwerkstoffe recycelt werden, auch solche, die Kohlefasern enthalten.

Die außerordentliche Bedeutung des Verfahrens nach der Erfindung liegt darin, daß die Duroplastwerkstoffe so schonend hydriert werden, daß einerseits die Kunststoffkomponenten rohstofflich recycelt und andererseits Füllstoffe bzw. Einlagerungs- und Verbundkomponenten quantitativ und in reiner Form zurückgewonnen und wieder verwendet werden können. Für die Elektronik und Elektrotechnik können auf diese Weise auch die in elektronischen Schaltungen eingesetzten Metalle in reiner Form zurückerhalten werden. Ein weiterer Vorteil dieses Verfahrens besteht darin, daß auch halogenhaltige Duroplastwerkstoffe eingesetzt werden können. Dabei entstehen aber keine Halogenwasserstoffe.

Die hydrierende Spaltung kann - je nach dem eingesetzten Wasserstoffdonator bzw. dessen Siedepunkt - drucklos unter Rückfluß oder unter Druck in einem Druckbehälter erfolgen. Als Druckbehälter kann beispielsweise ein Autoklav oder ein Bombenrohr dienen. Im Verlauf der hydrierenden Spaltung des Duroplastwerkstoffes baut sich im Druckbehälter - temporär - ein bestimmter Druck auf.

Beim Verfahren nach der Erfindung können - als Werkstoffe - sowohl gehärtete Duroplastformstoffe selbst als auch gefüllte Formstoffe eingesetzt werden. Vorzugsweise gelangen jedoch Verbundwerkstoffe zum Einsatz, wobei beispielsweise Glasfasern bzw. Glasfasergewebe zurückgewonnen werden. Von besonderer Bedeutung ist dieses Verfahren aber für Duroplastverbundwerkstoffe, vor allem Epoxidharzverbundwerkstoffe, die Kohlefasern bzw. Kohlefasergewebe oder Metalle, wie Gold und Kupfer, enthalten oder Bauelemente aufweisen. Beim rohstofflichen Recycling derartiger Werkstoffe werden die Verbundkomponenten in reiner Form zurückerhalten.

Anhand von Ausführungsbeispielen soll die Erfindung noch näher erläutert werden.

### Beispiel 1

### Hydrierende Spaltung eines Phenol-Formaldehydharz-Formstoffes

Zur Herstellung eines Phenol-Formaldehydharzes wurden 50 g Phenol, 57,2 ml einer 37 %igen wäßrigen Formaldehydlösung und 2,5 g Ba(OH)₂ · 8 H₂O 8 h unter Rühren erhitzt. Die Mischung wurde dann durch Zugabe von 10 %iger Schwefelsäure neutralisiert, BaSO₄ abfiltriert, das Wasser im Vakuum abdestilliert und die zurückbleibende klebrige Masse 5 h unter allmählicher Steigerung der Temperatur auf 100°C kondensiert. Das noch schmelzbare Resitol wurde auf eine Aluminiumfolie gegossen, 2 h bei 150°C im Vakuum ausgehärtet und danach gemahlen.

1 g des Phenol-Formaldehydharzes wurde zusammen mit 5 g Tetralin und 1 g Ethanolamin in ein Reagenzglas gegeben und dieses in einem Bombenrohr mit einem Heizmantel erwärmt. Die jeweilige Temperatur wurde mittels einer Regelautomatik mit Thermoelement eingestellt und mit einem Temperaturfühler kontrolliert. Das Aufheizen auf eine Hydriertemperatur im Bereich von 300 bis 360°C, um die eigentliche Reaktionstemperatur zu ermitteln, dauerte etwa 35 min. Als Reaktionsdauer der Hydrierung wurde die Zeitspanne vom Erreichen der Solltemperatur bis zum Abschalten der Heizung definiert. Für den sich im Bombenrohr in Abhängigkeit von der Temperatur T einstellenden Dampfdruck p wurden folgende Werte ermittelt:

| | | | | |
|---|---|---|---|---|
| T in °C | 300 | 320 | 340 | 360 |
| p in bar | 5.59 | 7.57 | 10.03 | 13.04 |

Nach einer Abkühlperiode von ca. 6 h wurde das Bombenrohr geöffnet. Dabei wurde nur ein geringer Restdruck festgestellt, der wahrscheinlich auf die Bildung niedermolekularer Abbauprodukte wie Wasserstoff, Methan, Ethan usw. zurückzuführen ist.

Zur Ermittlung des temperaturabhängigen Umsatzes wurde die Temperatur im Bombenrohr in Schritten von 10°C in einem Bereich von 300 bis 350°C variiert und jeweils 5 h beim gewählten Wert gehalten. Dabei zeigte sich, daß bei einer Hydrierungstemperatur von 330°C das Ausgangsmaterial quantitativ in tetralinlösliche Reaktionsprodukte umgesetzt wird. Bei einer Destillation der Tetralinlösung wurden erhebliche Mengen Phenol sowie o-, m- und p-Kresol erhalten.

### Beispiel 2

### Hydrierende Spaltung eines aminisch gehärteten, glasfaserverstärkten Epoxidharzformstoffes

Bei dem glasfaserverstärkten Epoxidharzformstoff handelt es sich um ein Leiterplattenbasismaterial. Zur Herstellung dieses Materials wurden 67 Masseteile eines epoxidierten Novolaks zusammen mit 33 Masseteilen Polyarylaminoisocyanurat (als Härter) in einer Mischung aus 60 % Methylethylketon und 40 % Dimethylformamid gelöst. Ein mit dieser Lösung getränktes Glasfasergewebe wurde zu Prepregs verarbeitet, und aus den Prepregs wurde bei 180°C durch zweistündiges Härten in einer Presse das Leiterplattenbasismaterial hergestellt.

Dieses Material wurde in einer Schneidmühle bis zu einem Korndurchmesser von ≤ 2 mm zerkleinert. 1 g des Mahlgutes wurde zusammen mit 5 g Tetralin in ein Reagenzglas gegeben und dieses in einem Bombenrohr bei Temperaturen von 290 bis 350°C - in Schritten von 10°C - jeweils 5 h erhitzt. Dabei zeigte sich, daß das Material bereits bei einer Hydrierungstemperatur von 320°C zu über 99 % zu tetralinlöslichen Reaktionsprodukten abgebaut wird. Das Glasfasergewebe wird dabei in sehr reiner Form quantitativ zurückgewonnen. Aus der Tetralinlösung können erhebliche Mengen der wertvollen Basischemikalie 2,4-Diaminotoluol isoliert werden.

Bei Temperaturen von ≥ 360°C wird im übrigen eine zunehmende Verkohlung des Materials beobachtet. Dabei reduziert sich die Tetralinlöslichkeit der Reaktionsprodukte auf 95 %, und die zurückgewonnenen Glasfasern weisen schwarze, tetralinunlösliche Verunreinigungen auf.

In einem weiteren Versuch wurde 1 g des Mahlgutes zusammen mit 5 g Tetralin und 1 g Octylamin 5 h auf 280°C erhitzt. Dabei wurde das Material quantitativ in tetralinlösliche Produkte übergeführt.

### Beispiel 3

### Hydrierende Spaltung eines aminisch gehärteten, glasfaserverstärkten Epoxidharzformstoffes

Ein etwa 1 cm x 5 cm großes Stück des Leiterplattenbasismaterials nach Beispiel 2 wurde unzerkleinert in ein Reagenzglas gegeben und entsprechend Beispiel 2 mit Tetralin in einem Bombenrohr hydriert. Es wurde gefunden, daß das Material auch in dieser Form hydriert und gespalten werden kann. Bei einer Hydrierungstemperatur von 320°C und einer Reaktionszeit von 5 h beträgt der tetralinlösliche Anteil der Hydrierungsprodukte 99,3 %. Das Glasfasergewebe kann mit vernachlässigbaren Verunreinigungen quantitativ zurückgewonnen werden.

### Beispiel 4

### Hydrierende Spaltung eines aminisch gehärteten, Kupfer enthaltenden Epoxidharzformstoffes

Prepregs entsprechend Beispiel 2 wurden beim Verpressen beidseitig mit einer 35 µm dicken Kupferfolie kaschiert; auf diese Weise wurde ein kupferkaschiertes Leiterplattenbasismaterial erhalten.

Um den Einfluß des Kupfers auf den Hydrierungsvorgang zu untersuchen, wurde ein etwa 1 cm x 5 cm großes Stück des Materials in einem Autoklaven der hydrierenden Spaltung mit Tetralin (Reaktionsdauer: 5 h) unterworfen. Dabei zeigte sich, daß das Material bereits bei einer Hydrierungstemperatur von 330°C zu über 99 % abgebaut wird (tetralinlöslicher Anteil). Sowohl das Glasfasergewebe als auch die Kupferfolien werden in sehr reiner Form zurückgewonnen.

In einem weiteren Versuch wurde die Reaktionsdauer bei 330°C variiert. Dabei ergab sich, daß die Reaktion in den beiden ersten Stunden - wegen der geringen Oberfläche des Probekörpers - relativ langsam verläuft. Nach ca. 2 h delaminiert dann das Material, so daß - über die dadurch vergrößerte Oberfläche - die Hydrierungsgeschwindigkeit stark ansteigt und bereits nach 3 h 99 % des Materials in Tetralin löslich sind.

### Beispiel 5

### Hydrierende Spaltung eines aminisch gehärteten, Kupfer enthaltenden Epoxidharzformstoffes

Ein etwa 1 cm x 5 cm großes Stück des kupferkaschierten Leiterplattenbasismaterials entsprechend Beispiel 4 wurde mit 5 g Tetralin und 1 g Ethanolamin versetzt und in einem Autoklaven bei 280°C der hydrierenden Spaltung unterworfen. Nach 4 h war das Material vollständig abgebaut und in Tetrahydrofuran löslich. Das Kupfer und das Glasfasergewebe konnten in reiner Form zurückgewonnen werden.

In einem weiteren Versuch bei 300°C wurde die hydrierende Spaltung nach 1 h abgebrochen. Dabei wurde festgestellt, daß das Material quantitativ in Tetrahydrofuran-lösliche Bestandteile übergeführt wurde.

### Beispiel 6

### Hydrierende Spaltung eines aminisch gehärteten, Kupfer enthaltenden Epoxidharzformstoffes

Ein etwa 1 cm x 5 cm großes Stück des kupferkaschierten Leiterplattenbasismaterials entsprechend Beispiel 4 wurde unter einer Stickstoffatmosphäre mit 50 g Indolin bei einer Temperatur von 230°C hydrierend gespalten (Reaktionszeit: 6 h); da Indolin einen Siedepunkt von 230°C besitzt, wird kein Druckbehälter benötigt. Dabei wurde eine klare Lösung erhalten, die sich nach kurzem Stehen an der Luft rötlich färbte. Die Harzmatrix, d.h. der Epoxidharzformstoff, wurde quantitativ in lösliche Produkte übergeführt, das Kupfer und das Glasfasergewebe konnten in reiner Form zurückgewonnen werden.

### Beispiel 7

### Hydrierende Spaltung eines aminisch gehärteten, Kupfer enthaltenden Epoxidharzformstoffes

Ein etwa 1 cm x 5 cm großes Stück des kupferkaschierten Leiterplattenbasismaterials entsprechend Beispiel 4 wurde zusammen mit 10 g Indolin und 20 g Tetralin in ein Reagenzglas gegeben und in einem Bombenrohr bei einer Temperatur von 250°C hydrierend gespalten (Reaktionszeit: 20 h). Die dabei erhaltene klare Lösung färbte sich nach Luftzutritt rötlich.

Die Harzmatrix, d.h. der Epoxidharzformstoff, wurde quantitativ in lösliche Produkte übergeführt, das Kupfer und das Glasfasergewebe konnten ohne Verunreinigungen zurückgewonnen werden.

### Beispiel 8

### Hydrierende Spaltung eines aminisch gehärteten, Kupfer enthaltenden Epoxidharzformstoffes

Ein etwa 1 cm x 5 cm großes Stück des kupferkaschierten Leiterplattenbasismaterials entsprechend Beispiel 4 wurde unter einer Stickstoffatmosphäre mit 10 g 9,10-Dihydroanthracen auf eine Temperatur von 300°C erhitzt; da 9,10-Dihydroanthracen erst bei 315°C siedet, wird kein Druckbehälter benötigt. Nach ca. 20 h begann das Material zu delaminieren. Nach weiteren 8 h war die gesamte Harzmatrix, d.h. der Epoxidharzformstoff, in lösliche Produkte übergeführt; das Kupfer und das Glasfasergewebe konnten in reiner Form zurückgewonnen werden.

### Beispiel 9

### Hydrierende Spaltung eines aminisch gehärteten, halogenhaltigen Epoxidharzformstoffes

Ein etwa 1 cm x 5 cm großes Stück eines 1,6 mm dicken, kupferfreien kommerziellen FR4-Leiterplattenmaterials, das - wegen der Komponente Tetrabrombisphenol-A - ca. 10 % Brom enthält, wurde - entsprechend Beispiel 8 - unter einer Stickstoffatmosphäre mit 10 g 9,10-Dihydroanthracen auf eine Temperatur von 310°C erhitzt. Nach ca. 24 h war die gesamte Harzmatrix, d.h. der Epoxidharzformstoff, in lösliche Produkte übergeführt; das Glasfasergewebe konnte in reiner Form zurückgewonnen werden. Außerdem zeigte sich, daß bei den bei der hydrierenden Spaltung herrschenden Reaktionsbedingungen kein Bromwasserstoff (HBr) freigesetzt wird.

### Beispiel 10

### Hydrierende Spaltung eines aminisch gehärteten, kohlefaserverstärkten Epoxidharzformstoffes

20 Masseteile Methanphosphonsäurediglycidylester, 20 Masseteile Bisphenol-F-diglycidylester, 25 Masseteile epoxidierter Novolak, 10 Masseteile Butandioldiglycidylester und 25 Masseteile Diaminodiphenylmethan wurden nach dem sogenannten RTM-Verfahren in eine Plattenform gefüllt, die etwa 60 % Kohlefasern in Form eines UD-Geleges (unidirektionales Gelege) enthielt. Die Platte wurde bei 160°C 5 h gehärtet.

Ein etwa 1 cm x 5 cm großes Stück der Platte wurde, wie in Beispiel 3 beschrieben, bei 320°C über einen Zeitraum von 5 h einer hydrierenden Spaltung mit Tetralin unterworfen. Dabei wurde die Harzmatrix quantitativ in tetralinlösliche Produkte übergeführt. Die Kohlefasern hingegen verhielten sich inert und konnten quantitativ zurückgewonnen werden. Weder unter einem Lichtmikroskop noch unter einem Rasterelektronenmikroskop konnten Beschädigungen an den Kohlefasern festgestellt werden. Die Zugfestigkeit der zurückgewonnenen Kohlefasern wies mit 3950 MPa praktisch den gleichen Wert auf wie bei den zur Herstellung des Formstoffes eingesetzten Fasern.

### Beispiel 11

### Hydrierende Spaltung eines anhydridisch gehärteten Epoxidharzformstoffes

Eine Harzmischung aus 680 Masseteilen Bisphenol-A-diglycidylether und 148 Masseteilen Phthalsäureanhydrid wurde in einer Form bei 180°C 2 h gehärtet. Zur Prüfung des hydrierenden Abbaus des Epoxidharzformstoffes wurde dieser in einer Schneidmühle bis zu einem Korndurchmesser von ≤ 2 mm zerkleinert. 1 g dieses Materials wurde zusammen mit 5 g Tetralin in ein Reagenzglas gegeben und dieses in einem Bombenrohr mit einem Heizmantel erwärmt.

Zur Charakterisierung der entstandenen Produkte wurde die Reaktionsmischung über eine getrocknete Fritte abgesaugt und der Rückstand mit Tetrahydrofuran gewaschen. Die Fritte wurde nach Trocknen bis zur Gewichtskonstanz ausgewogen, und dann wurden die tetralinunlöslichen bzw. tetralinlöslichen Bestandteile bestimmt.

Zur Ermittlung des temperaturabhängigen Umsatzes wurde die Temperatur im Bombenrohr in Schritten von 10°C in einem Bereich von 300 bis 350°C variiert und jeweils 5 h beim gewählten Wert gehalten. Dabei zeigt sich, daß bei einer Hydrierungstemperatur von 340°C ca. 84 % des Ausgangsmaterials in tetralinlösliche Reaktionsprodukte umgesetzt werden. Bei dem unlöslichen Anteil (16 %) handelt es sich um reine Phthalsäure in Form farbloser Nadeln. Dies bedeutet, daß bei einer Reaktionstemperatur von 340°C der Umsatz praktisch 100 % beträgt.

Neben der Phthalsäure (mit einer quantitativen Rückgewinnung) konnten aus der Reaktionsmischung - durch Destillation und Extraktion - noch erhebliche Mengen an Isopropanol, Benzol, Phenol, Isopropylphenol und Kresolen isoliert werden.

Um die für eine optimale Hydrierung erforderliche Reaktionszeit zu ermitteln, wurde bei einer Temperatur von 350°C die Reaktionsdauer von 1 bis 5 h variiert. Dabei zeigt sich, daß eine Reaktionsdauer von 2 h ausreichend ist, um den Reaktionsharzformstoff quantitativ zu hydrieren und tetralinlösliche Reaktionsprodukte und Phthalsäure zu bilden.

## Patentansprüche

1. Verfahren zum rohstofflichen Recycling von Duroplastwerkstoffen, **dadurch gekennzeichnet, daß** ein Duroplastwerkstoff bei einer Temperatur von 200 bis 350°C - in Gegenwart eines Amins und/oder einer Verbindung mit einem aminischen Strukturelement - mit einem partiell hydrierten aromatischen Kohlenwasserstoff behandelt wird.

2. Verfahren nach Anspruch 1, **dadurch gekennzeichnet, daß** als Duroplastwerkstoff ein Epoxidharzwerkstoff verwendet wird.

3. Verfahren nach Anspruch 1 oder 2, **dadurch gek ennzeichnet, daß** als Amin Ethanolamin oder Octylamin verwendet wird.

4. Verfahren nach einem der vorstehenden Ansprüche, **dadurch gekennzeichnet, daß** der Duroplastwerkstoff mit Indolin behandelt wird.

5. Verfahren zum rohstofflichen Recycling von Duroplastwerkstoffen auf Epoxidharzbasis, **dadurch gekennzeichnet, daß** ein Epoxidharzwerkstoff bei einer Temperatur von 300 bis 350°C mit einem partiell hydrierten aromatischen Kohlenwasserstoff behandelt wird.

6. Verfahren nach Anspruch 1 oder 5, **dadurch gekennzeichnet, daß** als partiell hydrierter aromatischer Kohlenwasserstoff 1,2,3,4-Tetrahydronaphthalin oder 9,10-Dihydroanthracen verwendet wird.

7. Verfahren nach Anspruch 1 oder 5, **dadurch gekennzeichnet, daß** ein Duroplastverbundwerkstoff eingesetzt wird.

8. Verfahren nach Anspruch 7, **dadurch gekennzeichnet, daß** ein Kohlefasern enthaltender Duroplastverbundwerkstoff eingesetzt wird.

## Revendications

1. Procédé de recyclage de matières premières de matériaux thermodurcissables, **caractérisé en ce qu'**un matériau thermodurcissable est traité à une température de 200 à 350°C en présence d'une amine et/ou d'un composé ayant un élément structural aminique, par un hydrocarbure aromatique partiellement hydrogéné.

2. Procédé selon la revendication 1, **caractérisé en ce qu'**un matériau à base de résine époxyde est employé comme matériau thermodurcissable.

3. Procédé selon la revendication 1 ou 2, **caractérisé en ce que** l'éthanolamine ou l'octylamine sont employées comme amine.

4. Procédé selon l'une quelconque des revendications précédentes, **caractérisé en ce que** le matériau thermodurcissable est traité par de l'indoline.

5. Procédé de recyclage de matières premières de matériaux thermodurcissables à base de résine époxyde, **caractérisé en ce qu'**un matériau à base de résine époxyde est traité à une température de 300 à 350°C par un hydrocarbure aromatique partiellement hydrogéné.

6. Procédé selon la revendication 1 ou 5, **caractérisé en ce que** le 1,2,3,4-tétrahydronaphtalène ou le 9,10-dihydroanthracène est employé comme hydrocarbure partiellement hydrogéné.

7. Procédé selon la revendication 1 ou 5, **caractérisé en ce qu'**un matériau composite est mis en oeuvre.

8. Procédé selon la revendication 7, **caractérisé en ce qu'**un matériau composite contenant des fibres de carbone est mis en oeuvre.

## Claims

1. Process for the feedstock recycling of thermoset materials, **characterized in that** a thermoset material is treated with a partially hydrogenated aromatic hydrocarbon - in the presence of an amine and/or of a compound having an aminic structural unit - at a temperature of from 200 to 350°C.

2. Process according to Claim 1, **characterized in that** epoxy resin material is used as thermoset material.

3. Process according to Claim 1 or 2, **characterized in that** ethanolamine or octylamine is used as amine.

4. Process according to any of the preceding claims, **characterized in that** the thermoset material is treated with indoline.

5. Process for the feedstock recycling of thermoset materials based on epoxy resins, **characterized in that** an epoxy resin material is treated with a partially hydrogenated aromatic hydrocarbon at a temperature of from 300 to 350°C.

6. Process according to Claim 1 or 5, **characterized in that** 1,2,3,4-tetrahydronaphthalene or 9,10-dihydroanthracene is used as partially hydrogenated aromatic hydrocarbon.

7. Process according to Claim 1 or 5, **characterized in that** a composite thermoset material is used.

8. Process according to Claim 7, **characterized in that** use is made of a composite thermoset material comprising carbon fibres.
